# EUROPÄISCHE PATENTANMELDUNG

(11) **EP 4 489 246 A1**
(43) Veröffentlichungstag der Anmeldung: **08.01.2025**
(21) Anmeldenummer: 24176814.2
(22) Anmeldetag: 19.05.2024
(51) Int. Cl.: H02J 1/10, H01M 10/44, H02J 7/34, H02J 7/35, H02J 15/00

(54) **SCHALTUNGSVORRICHTUNG**

(30) Priorität: 19.05.2023 DE 102023113225; 23.06.2023 DE 102023116598
(71) Anmelder: E³ Consulting GmbH, 89171 Illerkirchberg (DE)
(72) Erfinder: Adelmann, Peter, 89171 Illerkirchberg (DE)
(74) Vertreter: Baur & Weber Patentanwälte PartG mbB

(57) **Zusammenfassung**

Es wird eine Schaltungsvorrichtung (2) zur Ankopplung eines elektrischen Verbrauchers (4) an mehrere wiederaufladbare Batteriespeicher (6) und an eine Energiequelle (8) angegeben, die Eingangsanschlüsse (10, 12) aufweist, welche mit der Energiequelle (8) verbindbar oder verbunden sind, und die Ausgangsanschlüsse (16, 18) aufweist, welche mit dem Verbraucher (4) verbindbar oder verbunden sind, wobei für jeden Batteriespeicher (6) ein Spannungswert an eine Steuereinheit geführt ist, welche anhand der gemessenen Spannungswerte eine Teilmenge der Batteriespeicher (6) auswählt, wobei die Teilmenge der Batteriespeicher (6) über mehrere Schalter (22, 24) seriell gekoppelt sind, so dass sie bezüglich einer Eingangsspannung an den Eingangsanschlüssen (10, 12) oder einer Ausgangsspannung an den Ausgangsanschlüssen (16, 18) auswählbar sind.

## Beschreibung

Die Erfindung betrifft eine Schaltungsvorrichtung zur Ankopplung eines elektrischen Verbrauchers an mehrere wiederaufladbare Batteriespeicher und an eine Energiequelle.

Zur Versorgung elektrischer Verbraucher ist es an sich bekannt, unterschiedliche Energiequellen zu verwenden. Dazu gehören neben regenerativen Energiequellen auch Energiespeicher, welche beispielsweise von regenerativen Energiequellen versorgt werden können. Neben den ökologischen Vorteilen ist dies oftmals auch aus ökonomischen Gründen geboten, um unabhängig von Energiekosten von Stromanbietern zu werden.

Da regenerative Energiequellen aus Solarstrom oder Windkraft nicht kontinuierlich verfügbar sind, werden Pufferspeicher benötigt, um in Zeiten ohne Sonneneinstrahlung bzw. bei Windflaute Strom für die Verbraucher bereitstellen zu können. Hierfür werden unterschiedliche Batterietypen vorgeschlagen, wie z. B. Bleiakkumulatoren, Alkali-Mangan-Zellen oder Lithium-Ionen-Zellen, welche aufgrund ihrer individuellen Eigenschaften bezüglich Kosten, Speicherkapazität, Effizienz, Selbstentladung, möglicher Ladezyklen und maximaler Lebensdauer unterschiedliche Einsatzgebiete abdecken.

Ein Einsatzgebiet für Batteriespeicher in Zusammenhang mit Photovoltaikanlagen stellt die Speicherung von elektrischer Energie für die Abend- und Nachtstunden dar. Der Batteriespeicher benötigt dafür eine Kapazität, welche dem Verbrauch innerhalb dieser Zeitperiode entspricht. Die Selbstentladung des Speichers ist hier von geringerer Bedeutung, wichtig ist jedoch, dass sehr viele Ladezyklen möglich sind und der Batteriespeicher eine hohe Effizienz aufweist. Bei einem langjährigen Betrieb des Batteriespeichers ist mit mehreren Tausend Ladezyklen zu rechnen. Batteriespeicher können auch für einen längeren Zeitraum ausgelegt werden, beispielsweise um Schlechtwetterperioden oder jahreszeitliche Schwankungen der Stromproduktion zu überbrücken. Üblicherweise wird die Auslegung der Batteriespeicher als sogenannte Autonomietage angegeben und ist darüber hinaus vom Standort der Photovoltaikanlage abhängig. Insbesondere beim Überbrücken langer Zeiträume aufgrund jahreszeitlicher Schwankungen werden Batteriespeicher benötigt, welche eine sehr geringe Selbstentladung aufweisen. Die Anzahl der möglichen Ladezyklen kann hier jedoch deutlich geringer sein, da die Batteriespeicher beispielsweise nur während der Wintermonate entladen und in den übrigen Monaten geladen werden, um beispielsweise eine Wärmepumpe während der Wintermonate mit elektrischer Energie zu versorgen.

Ein Beispiel für eine Schaltungsvorrichtung zur Versorgung eines Verbrauchers aus wenigstens zwei über eine Energiequelle aufladbaren Pufferspeichern ist aus der DE 10 2020 123 899 B3 bekannt. Diese weist Eingangsanschlüsse, welche mit der Energiequelle verbindbar oder verbunden sind, und Ausgangsanschlüsse auf, welche mit dem Verbraucher verbindbar oder verbunden sind. Die Pufferspeicher sind über mehrere Schalter und Dioden in einer Pufferspeicherschaltung so schaltbar, dass sie bezüglich einer an den Eingangsanschlüssen anliegenden Eingangsspannung und einer an den Ausgangsanschlüssen anliegenden Ausgangsspannung wahlweise seriell zuschaltbar sind, so dass die Schaltungsvorrichtung mit unterschiedlicher Eingangsspannung und Ausgangsspannung betreibbar ist. Die Pufferspeicherschaltung weist eingangsseitig eine in einer ersten Parallelschaltung zu einem ersten Schalter angeordnete erste Serienschaltung aus einer ersten Diode und dem Pufferspeicher auf und ausgangsseitig eine in einer zweiten Parallelschaltung zu einer zweiten Diode angeordnete zweite Serienschaltung aus einem zweiten Schalter und dem Pufferspeicher auf.

Aus der DE 10 2012 222 337 A1 ist ein Photovoltaiksystem mit einer Energiespeichereinrichtung zum Erzeugen einer Versorgungsspannung an Ausgangsanschlüssen der Energiespeichereinrichtung bekannt, welche mindestens einen parallel geschalteten Energieversorgungsstrang mit jeweils einem oder mehreren in dem Energieversorgungsstrang in Serie geschalteten Energiespeichermodulen, welche jeweils ein Energiespeicherzellenmodul mit mindestens einer Energiespeicherzelle und eine Koppeleinrichtung mit einer Vielzahl von Koppelelementen, welche dazu ausgelegt ist, das Energiespeicherzellenmodul selektiv in den jeweiligen Energieversorgungsstrang zu schalten oder in dem jeweiligen Energieversorgungsstrang zu umgehen, umfassen, aufweist, einem Photovoltaikmodul mit ein oder mehreren Photovoltaikzellen, welches direkt mit den Ausgangsanschlüssen der Energiespeichereinrichtung gekoppelt ist, und einer Steuereinrichtung, welche mit der Energiespeichereinrichtung gekoppelt ist, und welche dazu ausgelegt ist, die Koppeleinrichtungen der Energiespeichermodule zum Einstellen einer Versorgungsspannung in Abhängigkeit von dem Stromfluss in den ein oder mehreren Photovoltaikzellen an den Ausgangsanschlüssen der Energiespeichereinrichtung anzusteuern.

Die CN 1 14 069 774 A zeigt ein photovoltaisches Energiespeichersystem zur Nachführung einer von einer photovoltaischen Zelle erzeugten maximalen Leistung und ein auf diesem System basierendes photovoltaisches Stromerzeugungssystem in Bezug zur Steuerungstechnik der photovoltaischen Zelle.

Aufladbare Alkali-Mangan-Batterien sind seit längerer Zeit bekannt, sind jedoch in jüngster Zeit wieder Gegenstand zahlreicher Forschungsprojekte, da sie eine kostengünstige Speicherung elektrischer Energie ermöglichen könnten.

Beispielsweise beschreibt die EP 0 818 837 A1 eine aufladbare Batterie, welche eine positive Elektrode aus Mangandioxid, eine negative Elektrode aus Zinkpulver, einen alkalischen Elektrolyten und einen zwischen den Elektroden angeordneten Separator umfasst. Der Separator besteht aus wenigstens einer Schicht aus ionendurchlässiger Membran und wenigstens einer filzartigen und saugfähigen Schicht. Die filzartige und saugfähige Schicht besteht wenigstens teilweise aus Kunststoffteilchen, welche sich thermisch aufschmelzen lassen. Der Separator ist an einem Ende dicht verschlossen. Klebstoff für den Verschluss besteht aus den thermisch schmelzbaren Teilchen der filzartigen und saugfähigen Schicht.

Ausgehend von diesem Stand der Technik haben sich die Erfinderin bzw. der Erfinder nun die Aufgabe gestellt, eine Schaltungsvorrichtung zur Ankopplung eines elektrischen Verbrauchers an mehrere wiederaufladbare Batteriespeicher und an eine Energiequelle sowie einen Energiespeicher mit der Schaltungsvorrichtung zu schaffen, die bei unterschiedlichen Batterietypen einsetzbar ist.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Schaltungsvorrichtung zur Ankopplung eines elektrischen Verbrauchers an mehrere wiederaufladbare Batteriespeicher und an eine Energiequelle angegeben, die Eingangsanschlüsse aufweist, welche mit der Energiequelle verbindbar oder verbunden sind, und die Ausgangsanschlüsse aufweist, welche mit dem Verbraucher verbindbar oder verbunden sind, wobei für jeden Batteriespeicher ein Spannungswert an eine Steuereinheit geführt ist, welche anhand der gemessenen Spannungswerte eine Teilmenge der Batteriespeicher auswählt, wobei die Teilmenge der Batteriespeicher über mehrere Schalter seriell gekoppelt sind, so dass sie bezüglich einer Eingangsspannung an den Eingangsanschlüssen oder einer Ausgangsspannung an den Ausgangsanschlüssen auswählbar sind.

Demnach wird mit der erfindungsgemäßen Schaltungsvorrichtung eine Anbindung eines Verbrauchers an eine regenerative Energiequelle ermöglicht, bei der sowohl die Eingangsspannung als auch die Ausgangsspannung anhand der Auswahl der Teilmenge der Batteriespeicher angepasst werden kann. Dies ist insbesondere dann von Vorteil, wenn eine große Variation der Batteriespannung zwischen Aufladen und Entladen vorliegt, wie dies beispielsweise bei neueren Entwicklungen auf dem Gebiet der wieder aufladbaren Zink-Mangan-Batterien beobachtet wird. Wiederaufladbare Zink-Mangan-Batterien lassen sich neben der großen Spannungsspreizung durch sehr niedrige Selbstentladung und geringe Kosten charakterisieren, wobei die Lebensdauer limitiert ist, da nur wenig Ladezyklen möglich sind. In Kombination mit einer Photovoltaikanlage sind wiederaufladbaren Zink-Mangan-Batterien mögliche Kandidaten für einen saisonalen Energiespeicher oder zur Überbrückung von Schlechtwetterperioden. Erfindungsgemäß ist mit der Schaltungsvorrichtung eine flexible Anpassung an unterschiedliche Anwendungsfälle möglich, da sich die mehreren Batteriespeicher auf unterschiedliche Weise in Reihe schalten lassen, sodass unterschiedliche Spannungswerte durch gezieltes Hinzunehmen, Ersetzen oder Abschalten einzelner Batteriespeicher realisiert werden können. Somit ist eine Anpassung sowohl an die Eingangs- als auch an die Ausgangsseite möglich.

Gemäß einer Ausführungsform der Erfindung ist bei der Schaltungsvorrichtung jeder Batteriespeicher Teil einer Batteriespeicherschaltung, sodass der Batteriespeicher in einer ersten Parallelschaltung zu einem ersten Schalter und einem zweiten Schalter angeordnet ist, wobei ein erster Batterieanschluss des Batteriespeichers und ein erster Anschluss des ersten Schalters verbunden und entweder mit einem ersten Eingangsanschluss und einem ersten Ausgangsanschluss der Schaltungsvorrichtung oder mit einer weiteren Batteriespeicherschaltung verbunden sind, wobei ein zweiter Batterieanschluss des Batteriespeichers mit einem ersten Anschluss des zweiten Schalters verbunden ist und wobei ein zweiter Anschluss des ersten Schalters und ein zweiter Anschluss des zweiten Schalters verbunden und entweder mit einem zweiten Eingangsanschluss und einem zweiten Ausgangsanschluss der Schaltungsvorrichtung oder mit einer weiteren Batteriespeicherschaltung verbunden sind.

Die beschriebene Ausführung der Batteriespeicherschaltung mit jeweils zwei Schaltern für einen Batteriespeicher ermöglicht aufgrund ihres einfachen Aufbaus eine kostengünstige Fertigung der erfindungsgemäßen Schaltungsvorrichtung. Auf diese Weise ist es möglich, die erfindungsgemäße Schaltungsvorrichtung auch in Kombination mit einer Vielzahl von Batteriespeichern Kosten effizient einzusetzen. Darüber hinaus liegt der Spannungsabfall an den beiden Schaltern im Bereich der Batteriespannung eines Batteriespeichers, sodass auch bei einer Reihenschaltung sehr vieler Batteriespeicher keine speziellen Hochspannungsschalter verwendet werden müssen und eine Realisierung beispielsweise mit MOS-FETs kostengünstig möglich ist.

Gemäß einer weiteren Ausführungsform der Erfindung wählt bei der Schaltungsvorrichtung die Steuerschaltung im Falle einer Aufladung der Teilmenge der Batteriespeicher durch die Energiequelle die Teilmenge der Batteriespeicher anhand der Batteriespannungen so aus, dass die Summe der Batteriespannungen der schwächsten Batteriespeicher so nahe wie möglich an einer gewünschten Arbeitsspannung der Schaltungsvorrichtung liegt.

Diese Ausführungsform beschreibt die Auswahlregel der Batteriespeicher für den Fall des Aufladens der Teilmenge der Batteriespeicher über die regenerative Energiequelle. Unter dem Begriff "schwächste Batteriespeicher" soll verstanden werden, dass im Falle einer Aufladung die gewünschte Spannungssumme priorisiert aus Batteriezellen mit niedriger Zellenspannung zusammengesetzt werden soll.

Gemäß einer weiteren Ausführungsform der Erfindung ersetzt bei der Schaltungsvorrichtung die Steuerschaltung zur Ladungskontrolle in der Auswahl der Teilmenge der Batteriespeicher bereits vollständig geladene Batteriespeicher durch andere Batteriespeicher.

Auf diese Weise ist es möglich, eine Ladungskontrolle beim Aufladen der Batteriespeicher mit der erfindungsgemäßen Schaltungsvorrichtung zu realisieren.

Gemäß einer weiteren Ausführungsform der Erfindung legt bei der Schaltungsvorrichtung die Steuerschaltung die Teilmenge der Batteriespeicher so fest, dass die Eingangsspannung an den Eingangsanschlüssen einem optimalen Arbeitspunkt der Energiequelle entspricht.

Die erfindungsgemäße Schaltungsvorrichtung kann gemäß dieser Ausführungsform zur Anpassung an einen optimalen Arbeitspunkt der Energiequelle genutzt werden, was in Kombination mit einer Photovoltaikanlage üblicherweise als MPP-Tracking bezeichnet wird.

Gemäß einer weiteren Ausführungsform der Erfindung wählt bei der Schaltungsvorrichtung die Steuerschaltung im Falle einer Entladung der Teilmenge der Batteriespeicher an den Verbraucher die Teilmenge der Batteriespeicher anhand der Batteriespannungen so aus, dass die Summe der Batteriespannungen der stärksten Batteriespeicher so nahe wie möglich an einer gewünschten Arbeitsspannung der Schaltungsvorrichtung liegt.

Gemäß einer weiteren Ausführungsform der Erfindung legt bei der Schaltungsvorrichtung die Steuerschaltung die Teilmenge der Batteriespeicher so fest, dass die Ausgangsspannung an den Ausgangsanschlüssen an einen Arbeitspunkt des Verbrauchers angepasst ist. Unter dem Begriff "stärkste Batteriespeicher" soll verstanden werden, dass im Falle einer Entladung die gewünschte Spannungssumme priorisiert aus Batteriezellen mit hoher Zellenspannung zusammengesetzt werden soll.

Neben den bisher beschriebenen Ausführungsformen, die eine Anpassung an die Eingangsseite betreffen, kann die erfindungsgemäße Schaltungsvorrichtung auch an den Arbeitspunkt des Verbrauchers angepasst werden, in dem die Ausgangsspannung durch Auswahl der Batteriespeicher entsprechend gewählt wird.

Gemäß einer weiteren Ausführungsform der Erfindung wählt bei der Schaltungsvorrichtung die Steuerschaltung im Falle einer gleichzeitigen Aufladung der Teilmenge der Batteriespeicher durch die Energiequelle und einer Entladung der Teilmenge der Batteriespeicher an den Verbraucher die Teilmenge der Batteriespeicher anhand der Batteriespannungen so aus, dass zur Ausbalancierung anstelle eines bereits vollständig geladenen Batteriespeicher ein anderer Batteriespeicher auswählbar oder ausgewählt ist.

Häufig wird die Schaltung jedoch unter gleichzeitigem Laden und Entladen betrieben, wobei hier durch gezieltes Abwählen bereits vollständig geladener Batteriespeicher ein Ausbalancieren erreicht werden kann. Es versteht sich jedoch von selbst, dass eine gleichzeitige Anpassung sowohl an die Eingangsseite als auch an die Ausgangsseite nicht immer möglich sein wird.

Gemäß einer weiteren Ausführungsform der Erfindung ist die Energiequelle eine Photovoltaikanlage.

Gemäß einer weiteren Ausführungsform der Erfindung ist der Batteriespeicher eine Zink-Mangan-Zelle oder eine Natrium-Ionen-Zelle.

Derartige Batteriespeicher weisen eine hohe Spannungsspreizung auf, was den Einsatz der erfindungsgemäßen Schaltungsvorrichtung besonders vorteilhaft werden lässt, da, wie oben beschrieben, sowohl die Eingangsspannung als auch die Ausgangsspannung anhand der Auswahl der Teilmenge der Batteriespeicher angepasst werden kann.

Gemäß einer weiteren Ausführungsform der Erfindung ist die Energiequelle zusätzlich mit einem Pufferspeicher versehen, der eine größere Anzahl möglicher Ladezyklen als der Batteriespeicher aufweist.

Die Aufgabe der Erfindung wird auch durch einen Energiespeicher zur Versorgung mit elektrischer Energie aus einer regenerativen Energiequelle gelöst, der zur Überbrückung einer Fluktuation in der regenerativen Energiequelle eine Schaltungsvorrichtung wie oben beschrieben aufweist.

In einer weiteren Ausführung des Energiespeichers ist die Anzahl der Batteriespeicher bezüglich der gesamten Speicherkapazität so gewählt, dass eine Schlechtwetterperiode überbrückbar ist.

In einer weiteren Ausführung des Energiespeichers ist die Anzahl der Batteriespeicher bezüglich der gesamten Speicherkapazität so gewählt, dass eine saisonale Überbrückung möglich ist.

In einer weiteren Ausführung des Energiespeichers ermöglicht die Anzahl möglicher Ladezyklen der Batteriespeicher einen Betrieb von bis zu 20 Jahren.

Nachfolgend werden einige Ausführungsbeispiele anhand der Zeichnung näher erläutert. Es zeigen:
- Figur 1: eine erste schematische Ansicht einer erfindungsgemäßen Schaltungsvorrichtung,
- Figur 2: eine weitere schematische Ansicht der erfindungsgemäßen Schaltungsvorrichtung,
- Figur 3: eine weitere schematische Ansicht der erfindungsgemäßen Schaltungsvorrichtung,
- Figur 4: eine weitere schematische Ansicht der erfindungsgemäßen Schaltungsvorrichtung,
- Figur 5: eine weitere schematische Ansicht der erfindungsgemäßen Schaltungsvorrichtung,
- Figur 6: eine weitere schematische Ansicht der erfindungsgemäßen Schaltungsvorrichtung, und
- Figur 7: eine weitere schematische Ansicht der erfindungsgemäßen Schaltungsvorrichtung.

In den Figuren sind gleiche oder funktional gleich wirkende Bauteile mit den gleichen Bezugszeichen versehen.

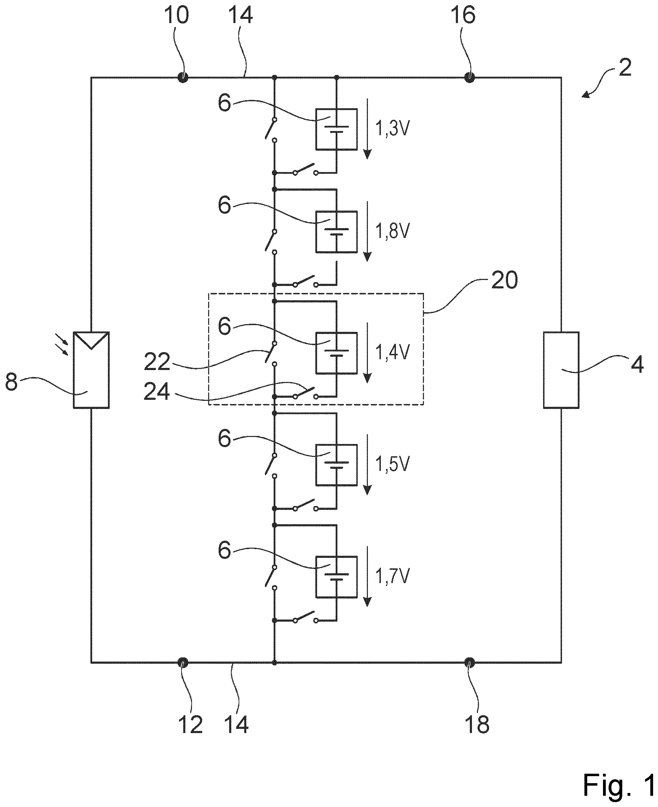

Unter Bezugnahme auf Figur 1 wird nachfolgend eine erste Ausführungsform einer Schaltungsvorrichtung 2 in einer schematischen Darstellung gezeigt.

Die Schaltungsvorrichtung 2 dient zur Ankopplung eines elektrischen Verbrauchers 4 an mehrere wiederaufladbare Batteriespeicher 6 und an eine Energiequelle 8. Die Schaltungsvorrichtung 2 weist Eingangsanschlüsse 10 und 12 auf, welche über Leitungen 14 mit der Energiequelle 8 verbunden sind. Des Weiteren weist die Schaltungsvorrichtung 2 Ausgangsanschlüsse 16 und 18 auf, welche mit dem Verbraucher 4 verbunden sind. Für jeden Batteriespeicher 6 wird sein Spannungswert an eine Steuereinheit (nicht in Figur 1 gezeigt) geführt, wie anhand der angegebenen Spannungswerte neben den Batteriespeichern 6 dargestellt ist. Typischerweise handelt es sich bei den Batteriespeichern 6 um eine Zink-Mangan-Zelle. Die Energiequelle 8 ist typischerweise eine Photovoltaikanlage, beispielsweise eine Balkonkraftwerk oder dergleichen. Die einzelnen Batteriespeicher 6 weisen eine hohe Spannungsspreizung auf und ihre Ausgangsspannung ändert sich zwischen einem geladenen und einem entladenen Zustand sehr stark. Typischerweise können die Spannungen bei derartigen Zellen je nach Ladezustand zwischen 0,8 V und 1,9 V liegen. Von der Energiequelle 8 kann beispielsweise eine Spannung von 48 V geliefert werden, sodass typischerweise 60 bis 80 Batteriespeicher 6 in Reihe geschaltet sein können. Die Erfindung wird im Folgenden anhand einer Arbeitsspannung von 5 V erläutert, wobei insgesamt fünf Batteriespeicher 6 vorgesehen sind. Dies dient jedoch lediglich der besseren Übersichtlichkeit und kann ohne weiteres auf viele Batteriespeicher 6 oder höhere Spannungen erweitert werden.

Anhand der gemessenen Spannungswerte kann die Steuerschaltung eine Teilmenge der Batteriespeicher 6 auswählen. Die Teilmenge der Batteriespeicher 6 sind über mehrere Schalter seriell gekoppelt, so dass sie bezüglich einer Eingangsspannung an den Eingangsanschlüssen 10 und 12 oder einer Ausgangsspannung an den Ausgangsanschlüssen 16 und 18 auswählbar sind.

Jeder Batteriespeicher 6 ist Teil einer Batteriespeicherschaltung 20 mit einem ersten Schalter 22 und einem zweiten Schalter 24. In der Batteriespeicherschaltung 20 ist der Batteriespeicher 6 in einer Parallelschaltung zu einem ersten Schalter 22 und einem zweiten Schalter 24 angeordnet. Ein erster Batterieanschluss des Batteriespeichers 6 und ein erster Anschluss des ersten Schalters sind verbunden und für den obersten Batteriespeicher 6 der Reihenschaltung mit dem ersten Eingangsanschluss 10 und dem ersten Ausgangsanschluss 16 der Schaltungsvorrichtung 2 verbunden. Die weitere Batteriespeicherschaltung 20 ist dann mit dem darüberliegenden Batteriespeicher 6 verbunden, wie in Figur 1 gezeigt ist.

Ein zweiter Batterieanschluss des Batteriespeichers 6 ist mit einem ersten Anschluss des zweiten Schalters 24 verbunden ist und ein zweiter Anschluss des ersten Schalters 22 und ein zweiter Anschluss des zweiten Schalters 24 sind verbunden. Für die letzte Batteriespeicherschaltung erfolgt dabei eine Verbindung mit dem zweiten Eingangsanschluss 12 und dem zweiten Ausgangsanschluss 18 der Schaltungsvorrichtung 2. Die weiteren Batteriespeicherschaltungen 20 sind dann mit dem nachfolgenden Batteriespeicher 6 verbunden, wie in Figur 1 gezeigt ist.

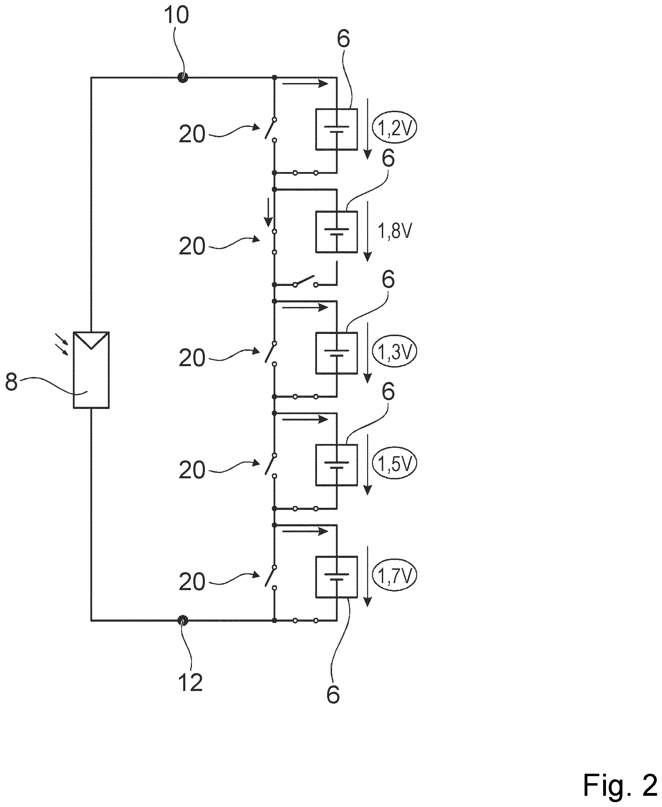

In Figur 2 ist eine weitere schematische Ansicht der Schaltungsvorrichtung 2 gezeigt. Die Steuerschaltung wählt im Falle einer Aufladung der Teilmenge der Batteriespeicher 6 durch die Energiequelle 8 die Teilmenge der Batteriespeicher 6 anhand der Batteriespannungen so aus, dass die Summe der Batteriespannungen der schwächsten Batteriespeicher so nahe wie möglich an einer gewünschten Arbeitsspannung der Schaltungsvorrichtung 2 liegt. Durch gezieltes Öffnen und Schließen der ersten Schalter 22 und der zweiten Schalter 24 kann erreicht werden, dass der zweite Batteriespeicher 6 mit dem Spannungswert 1,8 V nicht geladen wird und sich die übrigen Batteriespeicher 6 zu einer Gesamtspannung von 1,2 V + 1,3 V + 1,5 V + 1,7 V = 5,7 V ergänzen. Der zweite Batteriespeicher 6 ist aufgrund seines Spannungswerts von 1,8 V der stärkste Batteriespeicher und wird daher nicht ausgewählt.

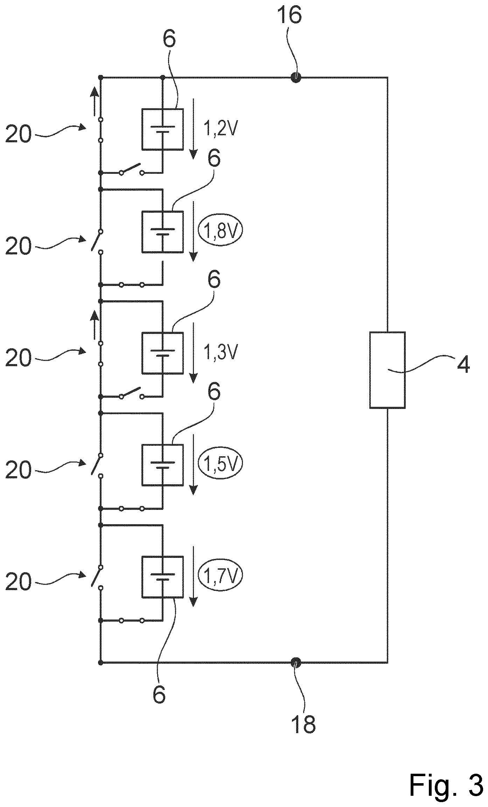

In Figur 3 ist eine weitere schematische Ansicht der Schaltungsvorrichtung 2 gezeigt. Die Steuerschaltung wählt hier im Falle einer Entladung der Teilmenge der Batteriespeicher 6 an den Verbraucher 4 die Teilmenge der Batteriespeicher 6 anhand der Batteriespannungen so aus, dass die Summe der Batteriespannungen der stärksten Batteriespeicher so nahe wie möglich an einer gewünschten Arbeitsspannung von hier beispielsweise 5 V der Schaltungsvorrichtung 2 liegt. Durch gezieltes Öffnen und Schließen der ersten Schalter 22 und der zweiten Schalter 24 für jeden Batteriespeicher 6 kann erreicht werden, dass nur der zweite, der vierte und der fünfte Batteriespeicher 6 entladen werden und sich zu einer Gesamtspannung von 1,8 V + 1,7 V + 1,5 V = 5 V ergänzen.

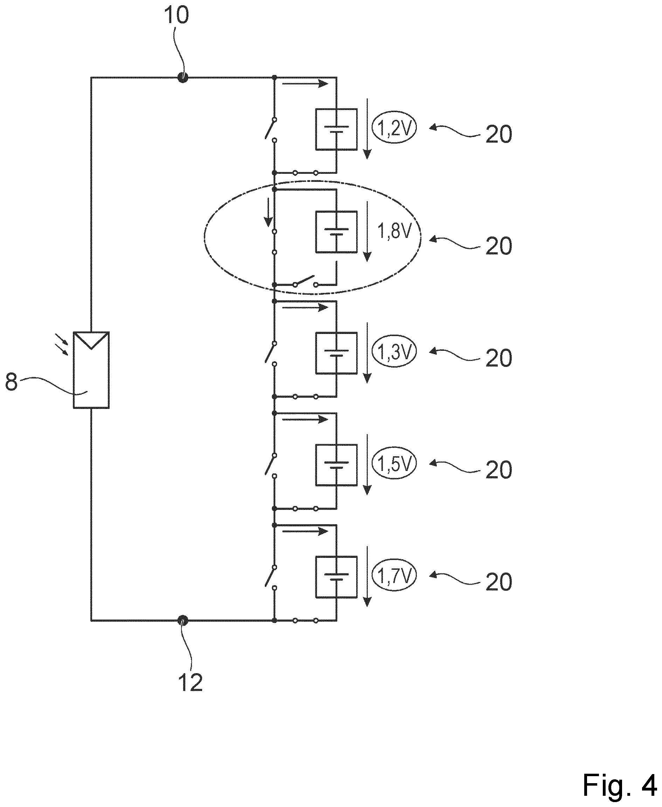

In Figur 4 ist eine weitere schematische Ansicht der Schaltungsvorrichtung 2 gezeigt. Die Steuerschaltung ersetzt zur Ladungskontrolle in der Auswahl der Teilmenge der Batteriespeicher 6 bereits vollständig geladene Batteriespeicher 6 durch andere Batteriespeicher 6. Durch gezieltes Öffnen und Schließen der ersten Schalter 22 und der zweiten Schalter 24 kann erreicht werden, dass der zweite Batteriespeicher 6 mit dem Spannungswert 1,8 V nicht geladen wird.

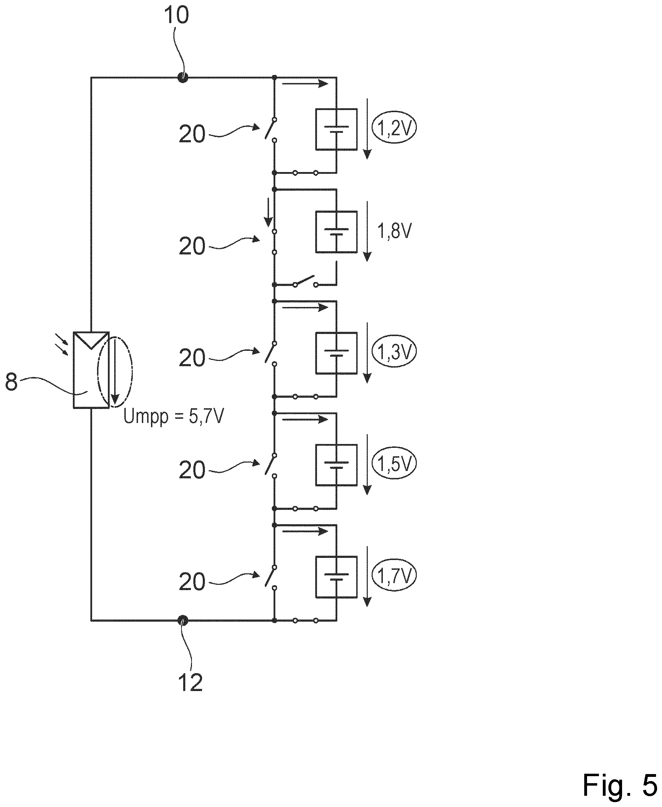

In Figur 5 ist eine weitere schematische Ansicht der Schaltungsvorrichtung 2 gezeigt. Die Steuerschaltung legt die Teilmenge der Batteriespeicher so fest, dass die Eingangsspannung an den Eingangsanschlüssen 10 und 12 einem optimalen Arbeitspunkt der Energiequelle 8 entspricht. Hier wird durch Abwählen des zweiten Batteriespeicher 6 eine Gesamtspannung von 1,2 V + 1,3 V + 1,5 V + 1,7 V = 5,7 V erreicht, welche im Rahmen eines MPP-Tracking für Solarzellen den optimalen Arbeitspunkt darstellen kann.

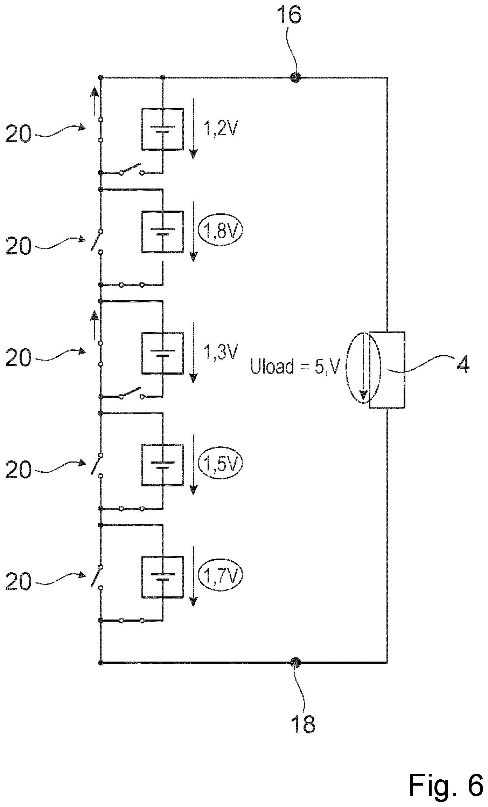

In Figur 6 ist eine weitere schematische Ansicht der Schaltungsvorrichtung 2 gezeigt. Die Steuerschaltung legt die Teilmenge der Batteriespeicher 6 so fest, dass die Ausgangsspannung an den Ausgangsanschlüssen 16 und 18 an einen Arbeitspunkt des Verbrauchers 4 angepasst ist. Durch gezieltes Öffnen und Schließen der ersten Schalter 22 und der zweiten Schalter 24 für jeden Batteriespeicher 6 kann erreicht werden, dass nur der zweite, der vierte und der fünfte Batteriespeicher 6 entladen werden und sich zu einer gewünschten Ausgangsspannung von 1,8 V + 1,7 V + 1,5 V = 5 V ergänzen.

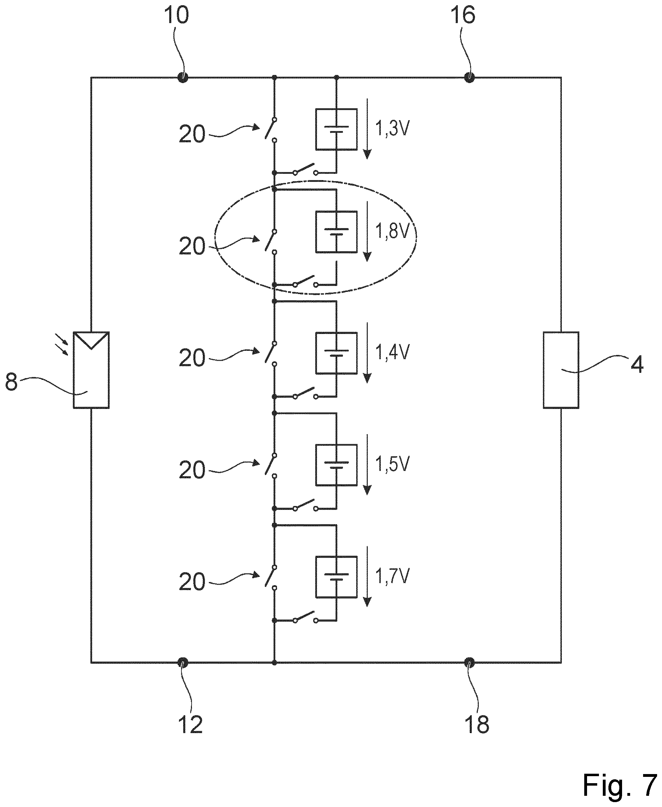

In Figur 7 ist eine weitere schematische Ansicht der Schaltungsvorrichtung 2 gezeigt. Die Steuerschaltung wählt im Falle einer gleichzeitigen Aufladung der Teilmenge der Batteriespeicher 6 durch die Energiequelle 8 und einer Entladung der Teilmenge der Batteriespeicher 6 an den Verbraucher 4 die Teilmenge der Batteriespeicher 6 anhand der Batteriespannungen so aus, dass zur Ausbalancierung anstelle eines bereits vollständig geladenen Batteriespeichers 6 ein anderer Batteriespeicher 6 auswählbar oder ausgewählt ist. Durch gezieltes Öffnen und Schließen der ersten Schalter 22 und der zweiten Schalter 24 kann erreicht werden, dass der zweite Batteriespeicher 6 mit dem Spannungswert 1,8 V nicht geladen wird. Höchste Priorität weist hier die Vorgabe auf, keine Batteriespeicher 6 durch zu hohe Spannungen oder durch Überladen zu zerstören.

Um einen Energiespeicher zur Versorgung mit elektrischer Energie aus einer regenerativen Energiequelle zu schaffen, kann dieser zur Überbrückung einer Fluktuation in der regenerativen Energiequelle 8 die Schaltungsvorrichtung 2 aufweisen. Die Anzahl der Batteriespeicher 6 bezüglich der gesamten Speicherkapazität ist dabei so gewählt, dass eine Schlechtwetterperiode überbrückbar ist oder eine saisonale Überbrückung möglich ist. Die Anzahl möglicher Ladezyklen der Batteriespeicher 6 begrenzt die Lebensdauer des Batteriespeichers 6, wobei ein Betrieb von bis zu 20 Jahren möglich sein kann.

Ein ZnMn-Akkumulator ist ein vielversprechender Kandidat für die saisonale Speicherung. Die hohen Spannungsschwankungen erfordern eine besondere

Behandlung. Die erfindungsgemäße Schaltungsvorrichtung 2 ist geeignet, dafür alle notwendigen Aufgaben zu erfüllen, d.h. Laderegelung, MPP-Tracking, Lastanpassung oder Ausbalancierung. Die Schaltung ist sehr effizient durch geringe Verluste in den Schaltelementen. Die Schaltung ist sehr kostengünstig, es werden keine Speicherkomponenten benötigt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 2: Schaltungsvorrichtung
- 4: Verbraucher
- 6: Batteriespeicher
- 8: Energiequelle
- 10: Eingangsanschluss
- 12: Eingangsanschluss
- 14: Leitungen
- 16: Ausgangsanschluss
- 18: Ausgangsanschluss
- 20: Batteriespeicherschaltung
- 22: erster Schalter
- 24: zweiter Schalter

## Patentansprüche

1. Schaltungsvorrichtung (2) zur Ankopplung eines elektrischen Verbrauchers (4) an mehrere wiederaufladbare Batteriespeicher (6) und an eine Energiequelle (8), die Eingangsanschlüsse (10, 12) aufweist, welche mit der Energiequelle (8) verbindbar oder verbunden sind, und die Ausgangsanschlüsse (16, 18) aufweist, welche mit dem Verbraucher (4) verbindbar oder verbunden sind, wobei für jeden Batteriespeicher (6) ein Spannungswert an eine Steuereinheit geführt ist, wobei die Teilmenge der Batteriespeicher (6) über mehrere Schalter (22, 24) seriell gekoppelt sind, so dass sie bezüglich einer Eingangsspannung an den Eingangsanschlüssen (10, 12) oder einer Ausgangsspannung an den Ausgangsanschlüssen (16, 18) anhand der gemessenen Spannungswerte der Batteriespeicher (6) als eine Teilmenge der Batteriespeicher (6) auswählbar sind.

2. Schaltungsvorrichtung (2) nach Anspruch 1, bei der jeder Batteriespeicher (6) Teil einer Batteriespeicherschaltung (20) ist, sodass der Batteriespeicher (6) in einer ersten Parallelschaltung zu einem ersten Schalter (22) und einem zweiten Schalter (24) angeordnet ist, wobei ein erster Batterieanschluss des Batteriespeichers (6) und ein erster Anschluss des ersten Schalters (22) verbunden und entweder mit einem ersten Eingangsanschluss (10) und einem ersten Ausgangsanschluss (16) der Schaltungsvorrichtung oder mit einer weiteren Batteriespeicherschaltung (20) verbunden sind, wobei ein zweiter Batterieanschluss des Batteriespeichers (6) mit einem ersten Anschluss des zweiten Schalters (24) verbunden ist und wobei ein zweiter Anschluss des ersten Schalters (22) und ein zweiter Anschluss des zweiten Schalters (24) verbunden und entweder mit einem zweiten Eingangsanschluss (12) und einem zweiten Ausgangsanschluss (18) der Schaltungsvorrichtung (2) oder mit einer weiteren Batteriespeicherschaltung (6) verbunden sind.

3. Schaltungsvorrichtung (2) nach Anspruch 1 oder 2, bei der die Steuerschaltung im Falle einer Aufladung der Teilmenge der Batteriespeicher (6) durch die Energiequelle (8) die Teilmenge der Batteriespeicher (6) anhand der Batteriespannungen so auswählt, dass die Summe der Batteriespannungen der schwächsten Batteriespeicher (6) so nahe wie möglich an einer gewünschten Arbeitsspannung der Schaltungsvorrichtung (2) liegt.

4. Schaltungsvorrichtung (2) nach Anspruch 3, bei der die Steuerschaltung zur Ladungskontrolle in der Auswahl der Teilmenge der Batteriespeicher (6) bereits vollständig geladene Batteriespeicher (6) durch andere Batteriespeicher (6) ersetzt.

5. Schaltungsvorrichtung (2) nach Anspruch 3 oder 4, bei der die Steuerschaltung die Teilmenge der Batteriespeicher (6) so festlegt, dass die Eingangsspannung an den Eingangsanschlüssen (10, 12) einem optimalen Arbeitspunkt der Energiequelle (8) entspricht.

6. Schaltungsvorrichtung (2) nach einem der Ansprüche 1 bis 5, bei der die Steuerschaltung im Falle einer Entladung der Teilmenge der Batteriespeicher (6) an den Verbraucher (4) die Teilmenge der Batteriespeicher (6) anhand der Batteriespannungen so auswählt, dass die Summe der Batteriespannungen der stärksten Batteriespeicher (6) so nahe wie möglich an einer gewünschten Arbeitsspannung der Schaltungsvorrichtung (2) liegt.

7. Schaltungsvorrichtung (2) nach Anspruch 6, bei der die Steuerschaltung die Teilmenge der Batteriespeicher (6) so festlegt, dass die Ausgangsspannung an den Ausgangsanschlüssen (16, 18) an einen Arbeitspunkt des Verbrauchers (4) angepasst ist.

8. Schaltungsvorrichtung (2) nach Anspruch 3 und 6, bei der die Steuerschaltung im Falle einer gleichzeitigen Aufladung der Teilmenge der Batteriespeicher (6) durch die Energiequelle (8) und einer Entladung der Teilmenge der Batteriespeicher (6) an den Verbraucher (4) die Teilmenge der Batteriespeicher (6) anhand der Batteriespannungen so auswählt, dass zur Ausbalancierung anstelle eines bereits vollständig geladenen Batteriespeichers (6) ein anderer Batteriespeicher (6) auswählbar oder ausgewählt ist.

9. Schaltungsvorrichtung (2) nach einem der Ansprüche 1 bis 8, bei der die Energiequelle (8) eine Photovoltaikanlage ist.

10. Schaltungsvorrichtung (2) nach einem der Ansprüche 1 bis 9, bei der der Batteriespeicher eine Zink-Mangan-Zelle ist.

11. Schaltungsvorrichtung (2) nach Anspruch 9 oder 10, bei der die Energiequelle (8) zusätzlich mit einem Pufferspeicher versehen ist, der eine größere Anzahl möglicher Ladezyklen als der Batteriespeicher (6) aufweist.

12. Energiespeicher zur Versorgung mit elektrischer Energie aus einer regenerativen Energiequelle (8), der zur Überbrückung einer Fluktuation in der der regenerativen Energiequelle (8) eine Schaltungsvorrichtung (2) nach einem der Ansprüche 1 bis 11 aufweist.

13. Energiespeicher nach Anspruch 12, bei der die Anzahl der Batteriespeicher (6) bezüglich der gesamten Speicherkapazität so gewählt ist, dass eine Schlechtwetterperiode überbrückbar ist.

14. Energiespeicher nach Anspruch 12, bei der die Anzahl der Batteriespeicher (6) bezüglich der gesamten Speicherkapazität so gewählt ist, dass eine saisonale Überbrückung möglich ist.

15. Energiespeicher nach einem der Ansprüche 12 bis 14, bei der die Anzahl möglicher Ladezyklen der Batteriespeicher (6) einen Betrieb von bis zu 20 Jahren ermöglicht.
